# EUROPÄISCHE PATENTSCHRIFT

(11) **EP 1 637 700 B1**
(45) Veröffentlichungstag und Bekanntmachung des Hinweises auf die Patenterteilung: **26.03.2008**
(21) Anmeldenummer: 04405605.9
(22) Anmeldetag: 21.09.2004
(51) Int. Cl.: F01D 17/16, F16C 25/04, F16F 1/02

(54) **Leitschaufelvorrichtung einer Strömungsmaschine und Strömungsmaschine**
Variable bladed nozzle of a turbomachine and turbomachine
Aubage variable de guidage d'une turbomachine et turbomachine

(43) Veröffentlichungstag der Anmeldung: 22.03.2006
(73) Patentinhaber: ABB Turbo Systems AG, 5400 Baden (CH)
(72) Erfinder: Schlienger, Joel, 8008 Zürich (CH); Kopp, Adrian, 5416 Kirchdorf (CH)
(74) Vertreter: ABB Patent Attorneys

(56) Entgegenhaltungen:
- EP-A- 0 226 444
- DE-A- 4 309 636
- US-A- 5 415 272

## Beschreibung

### Technisches Gebiet

Die Erfindung bezieht sich auf radialdurchströmte Abgasturboladerturbinen mit einzeln verstellbarer Leitschaufeln, welche über je eine in einem Gehäuse gelagerte Leitschaufelwelle verstellbar sind, wobei jede Leitschaufelwelle über einen Schwenkhebel betätigt wird. Die Erfindung betrifft eine Leitvorrichtung einer Strömungsmaschine mit rotierbar gelagerten Leitschaufeln und mit Federspannbügel zum giegenseitigen Verspannen der Leitschaufelwellen sowie einen Abgasturbolader mit einer solchen Leitvorrichtung.

### Stand der Technik

Abgasturbinen, insbesondere in Abgasturboladern, werden in Verbindung mit einem Verbrennungsmotor verwendet. Das Abgas aus dem Verbrennungsmotor wird als Antriebsmittel zum antreiben des Turbinenrades benutzt. Das Turbinenrad ist durch eine Welle mit dem Verdichterrad verbunden mit welchem die Ansaugluft, die dem Verbrennungsmotor zugeführt wird, komprimiert wird. Anstelle von einem festen Strömungsgitter (Düsenring) ist es mittlerweile üblich geworden, verstellbare Turbinengeometrien (VTG) einzusetzen. Dabei lassen sich durch einen Verstellmechanismus die Anstellwinkel von Turbinenleitschaufeln dem jeweiligen Betriebspunkt anpassen.

Eine VTG Vorrichtung umfasst in der Regel mehrere in einem Lagergehäuse auf Wellen gelagerte Leitschaufeln und einen Verstellmechanismus zum Drehen der Leitschaufeln. VTG Vorrichtungen sind etwa in EP 0 226 444 oder DE 43 09 636 beschrieben.

Die Leitschaufeln einer Abgasturbine, welche im Betrieb sehr stark erhitzt werden, müssen mit angemessenem Spiel in den Lagerbuchsen eingebaut sein, damit sie nicht verklemmen. Das Spiel kann in den Radiallagerstellen der Leitschaufeln mitunter zu Schwingungsreibverschleiss (Fretting) an den Auflageflächen zwischen der Leitschaufelwelle und der Lagerbuchsen führen, welcher beispielsweise durch betriebsbedingte Vibrationen des Lagergehäuses oder durch variable Strömungskräfte verursacht werden kann.

Aus US 5.415.272 ist eine Anordnung mit einem zwischen einem Paar nicht rotierender Rollenlagerwellen angeordneten Federspannbügel für die Dämpfung der Erschütterung eines Rollenförderwerks bekannt.

### Kurze Darstellung der Erfindung

Die Aufgabe der Erfindung besteht darin, eine Wellenlagerung derart zu verbessern, dass es zu weniger Verschleiss in den Lagerstellen kommt.

Diese Aufgabe wird mittels Federspannbügeln gelöst, welche zwischen die Wellen gespannt werden, so dass die Auflagekräfte der Wellen in eine bestimmte Richtung erhöht und die beispielsweise bei einer Abgasturbine durch die Gehäusevibrationen oder Strömungskräfte verursachten undefinierten Bewegungen der Leitschaufelwelle in der Lagerbuchse verhindert werden.

Der Einsatz von Federspannbügeln zwischen zwei Leitschaufelwellen führt zu einer definierten Kraft auf die Lagerstellen in Umfangsrichtung. Damit wird erreicht, dass resultierende Auflagekräfte aus der Spannkraft und variablen Strömungskräften immer positiv bleiben und die Leitschaufeln trotz den Vibrationen des Gehäuses in den Führungsbuchsen konstant aufliegen.

Der Federspannbügel ist erfindungsgemäss derart ausgebildet, dass er einerseits im Betrieb nicht von den Leitschaufelwellen abfällt und andererseits ohne die VTG Vorrichtung ausbauen zu müssen montiert werden kann.

Die Federspannbügel können in bestehende Strömungsmaschinen, beispielsweise die Turbine eines Abgasturboladers eingebaut werden, so dass der zukünftige Verschleiss der Leitschaufellager auf einfache weise reduziert werden kann.

Weitere Vorteile ergeben sich aus den abhängigen Ansprüchen.

### Kurze Beschreibung der Zeichnungen

Nachfolgend wird anhand von Figuren die Erfindung genauer erläutert. Hierbei zeigt:
- Fig. 1: einen Federspannbügel im erfindungsgemäss zwischen zwei Leitschaufelwellen montierten Zustand,
- Fig. 2: eine schematische Darstellung der auf die in einer Lagerbuchse gelagerte Leitschaufelwelle einwirkenden Kräften.

### Weg zur Ausführung der Erfindung

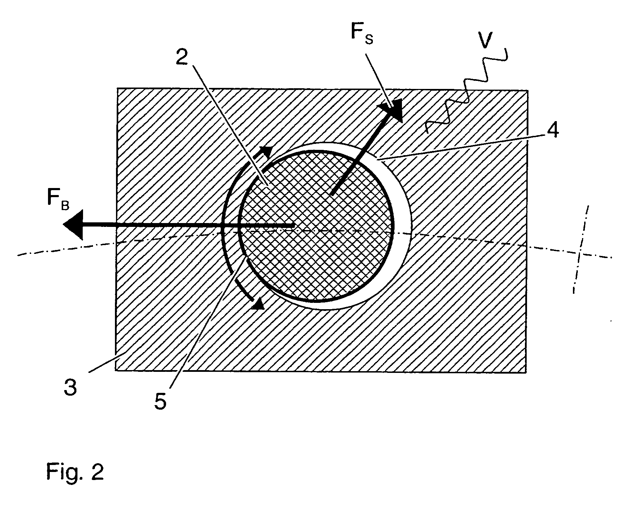

Fig. 2 zeigt schematisch die auf eine erfindungsgemäss mit einem Federspannbügel verspannte Leitschaufelwelle wirkenden Kräfte. Durch die vom Federspannbügel ausgeübte, in Umfangsrichtung (Umfangsrichtung der Abgasturbine, dargestellt durch die gekrümmte, gestrich-punktete Linie) wirkenden Spannbügelkraft F_{B} ergibt sich unabhängig von den Strömungskräften F_{S} und den Gehäusevibrationen V eine positive Auflagekraft, d.h. die Leitschaufelwelle 2 liegt immer in den Führungsbuchse 4 auf und kann nicht abheben. Der Mittelpunkt der Leitschaufelwelle wird durch die Spannbügelkraft F_{B} in Umfangsrichtung bis zum Anschlag an die Lagerbuchse verschoben. Der Auflagepunkt 5 der Leitschaufelwelle verschiebt sich mit unterschiedlichen Strömungskräften F_{S} in Abhängigkeit der unterschiedlichen Betriebspunkte dank der Spannbügelkraft F_{B} sanft entlang der Kontur der Lagerbuchse. Dieser Effekt sorgt für eine Reduktion des Verschleisses an der Leitschaufelwelle und/oder der Lagerbuchse, da sich der Ort maximaler Flächenpressung entlang der Kontaktkontur verteilt. Das Material wird im Schnitt erheblich geringer beansprucht, was zu einer Erhöhung der Lebensdauer der Leitschaufellager und somit der gesamten VTG Vorrichtung führt.

Der Federspannbügel wird von radial aussen her zwischen zwei Leitschaufelwellen gesteckt um eine definierte Spannbügelkraft in Umfangsrichtung auf die Wellenlager aufzubringen. Durch die erfindungsgemässe Formgebung der Bügelenden ist für diesen Montageschritt keine Demontage der VTG - Vorrichtung erforderlich. Der Serviceaufwand ist dadurch stark vereinfacht und er kann beispielsweise direkt im Feld, d.h. auf dem montierten Turbolader, erfolgen. Der Federspannbügel kann auch von radial innen her auf die Leitschaufeln aufgeschoben werden.

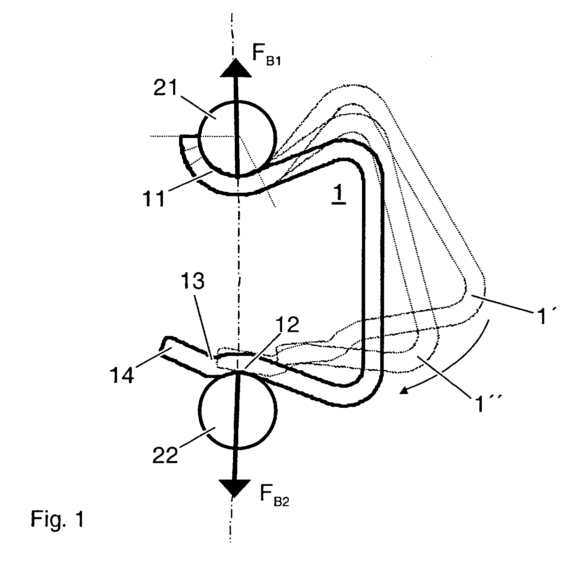

Der in Fig. 1 in seiner montierten Form dargestellte Federspannbügel 1 weist im Bereich des oberen Endes einen teilweise, bis etwa zu einem Winkel von 120° hin, der Wellenkontur entlanggezogenen Auflagebereich 11 auf. Diese teilweise Wellenumschliessung verhindert weitgehend das Abfallen des Federspannbügels im Betrieb der Abgasturbine und insbesondere beim Verstellen der Leitschaufeln, wenn die Leitschaufelwellen um die eigene Achse rotieren. Im Bereich des unteren Endes weist der Federspannbügel ebenfalls einen teilweise der Wellenkontur entlanggezogenen Auflagebereich 12 auf. Der beiden Auflagebereiche 11 und 12 können gleich- oder unterschiedlich lang der Kontur der entsprechenden Welle entlanggezogen sein.

Das untere Ende des Federspannbügels ist derart geformt, dass es gleitend auf den Wellenumfang der unteren Leitschaufelwelle eingreifen kann. Diese Montagehilfe ist mit einer entgegen der beim Verspannen des Federspannbügels von diesem unteren Ende auf die Welle ausgeübte Kraft verlaufenden Krümmung 13 realisiert. Das heisst, die Krümmung 13 am Endes des Federspannbügels ist anders gerichtet, als die Krümmung des unteren Auflagebereichs 12. Wie aus der Figur ersichtlich ist, kann anschliessend an die Krümmung noch ein kurzes, gerades Stück 14 ausgebildet sein, welches beim Montieren das 'Einfädeln' zwischen des Federspannbügels zwischen den Wellen weiter erleichtert.

Der Montageablauf kann anhand von Fig. 1 erläutert werden. Der Federspannbügel wird zuerst senkrecht zur oberen Welle 21 mit dem oberen Auflagebereich an die Welle geführt (dargestellt durch Position 1') und dann in Pfeilrichtung durch eine Drehbewegung um das obere Wellenzentrum in Richtung der unteren Welle gedrückt (Position 1"). Mit dem unteren Ende wird der Federspannbügel anschliessend über die zweite Welle 22 gedrückt, bis er mit dem unteren Auflagebereich auf der Welle in seiner definitiven Position (fett umrandet gezeichnet) einrastet.

Zwischen den beiden Auflagebereichen 11 und 12 ist das federnde Element des Federspannbügels angeordnet. In der dargestellten Ausführungsform handelt es sich um einen Doppelbogen. Je nach Anforderung an die auf die Wellen auszuübende Federkraft können andere Formen von Federelemente vorgesehen werden, beispielsweise ein einzelner Kreisbogen, oder gar eine Spiralfeder.

Alternativ zum dargestellten, zwischen zwei Wellen eingeschobenen Federspannbügel, kann die erfindungsgemäss verschleissmindernde Lagerbelastung auch mit einem auf zwei Wellen aufschiebbaren und diese umschliessenden Federspannbügel realisiert werden. Dabei sind die Auflageflächen zu den Wellen hin nach innen gebogen und der Spannbügel drückt die beiden Wellen im Umfangsrichtung zusammen, statt auseinander.

Zudem kann der erfindungsgemässe Federspannbügel auch zum Verspannen einer einzigen Welle gegenüber einem Gehäusevorsprung oder einem nicht rotierbar gelagerten Zapfen verwendet werden.

In der Anwendung der Leitvorrichtung einer Abgasturbine mit mehreren kreisförmig angeordneten Wellen können mit dem erfindungsgemässen Federspannbügel zwei benachbart angeordnete Wellen, oder aber zwei Wellen mit einer oder mehreren dazwischenliegenden Wellen gegeneinander verspannt werden. Über die Distanz zwischen den gegeneinander verspannten Wellen kann der Winkel der auf die beiden Wellen ausgeübten Spannbügelkräfte variiert werden.

Um Abrieb an den Schnittstellen zwischen Federspannbügel und Leitschaufelwelle, welcher durch die von der Spannbügelkraft auf der Welle bewirkte Reibung verursacht werden kann, zu verhindern, kann der Federspannbügel zumindest in den Auflagebereichen mit einer Verschleissschutzschicht (eine Schicht mit niedrigem Reibungskoeffizienten und/ oder geringem Abrieb) versehen werden. Natürlich kann auch die Welle in dem Bereich, welcher mit dem Federspannbügel in Kontakt steht, beschichtet sein, oder es kann eine verschleissfreie Zwischenschicht, etwa in Form einer auf den Federspannbügel oder die Welle aufsteckbaren Kappe, zwischen dem Federspannbügel und der Welle angeordnet werden.

### Bezugszeichenliste

- 1: Federspannbügel
- 11, 12: Auflagebereich
- 13: Montagehilfskrümmung
- 14: Endfortsatz
- 21, 22: Leitschaufelwelle
- 3: Lagergehäuse
- 4: Wellenlagerbuchse
- 5: Auflagepunkt der Leitschaufelwelle in der Lagerbuchse
- F_{B1}, F_{B2}: Spannbügelkraft
- F_{S}: Strömungskraft
- L: Bügelweite
- M: Bügellänge
- V: Vibrationsbewegungen

## Patentansprüche

1. Leitvorrichtung einer Strömungsmaschine, umfassend mehrere, auf rotierbar gelagerten Leitschaufelwellen (21, 22) angeordnete Leitschaufeln, **dadurch gekennzeichnet, dass** jeweils zwei Leitschaufelwellen (21, 22) mittels einem Federspannbügel (1) verspannt sind, wobei der Federspannbügel (1) je einen Wellenauflagebereich (11, 12) zum Aufnehmen je einer Leitschaufelwelle (21, 22) aufweist, und dass beim Verspannen der elastisch verformte Federspannbügel im Bereich der beiden Auflagebereiche zwei entgegengesetzt gerichtete Kräfte (F_{B1}, F_{B2}) in Richtung der verspannten Leitschaufelwellen hin bewirkt.

2. Leitvorrichtung einer Strömungsmaschine, umfassend mindestens eine, auf einer rotierbar gelagerten Leitschaufelwelle (21, 22) angeordnete Leitschaufel, **dadurch gekennzeichnet, dass** die Leitschaufelwelle (21, 22) mittels einem Federspannbügel (1) gegen ein Gehäuseteil verspannt ist, wobei der Federspannbügel (1) einen Wellenauflagebereich zum Aufnehmen der Leitschaufelwelle (21, 22) sowie einen Gehäuseauflagebereich zum Aufnehmen des Gehäuseteils aufweist, und dass beim Verspannen der elastisch verformte Federspannbügel im Bereich der beiden Auflagebereiche zwei entgegengesetzt gerichtete Kräfte in Richtung der verspannten Leitschaufelwelle hin einerseits und in Richtung des Gehäuseteils hin andererseits bewirkt.

3. Leitvorrichtung nach einem der Ansprüche 1 oder 2, **dadurch gekennzeichnet, dass** die Auflagebereiche (11, 12) entgegengesetzt gekrümmt ausgebildet sind.

4. Leitvorrichtung nach einem der Ansprüche 1 bis 3, **dadurch gekennzeichnet, dass** Federspannbügel (1) und/oder Leitschaufelwelle (21, 22) mit einer Verschleissschutzschicht beschichtet sind und/ oder, dass zwischen Federspannbügel (1) und Leitschaufelwelle (21, 22) eine Verschleissschutzschicht angeordnet ist.

5. Leitvorrichtung nach Anspruch 4, **dadurch gekennzeichnet, dass** die Auflagebereiche mit einer Verschleissschutzschicht beschichtet sind.

6. Abgasturbolader, **gekennzeichnet durch** eine Leitvorrichtung gemäss einem der Ansprüche 1 bis 5.

## Claims

1. Guide arrangement of a turbomachine, comprising a plurality of guide vanes arranged on rotatably mounted guide vane shafts (21, 22), **characterized in that** two respective guide vane shafts (21, 22) are restrained by means of a spring clamping clip (1), the spring clamping clip (1) having a respective shaft seating region (11, 12) for accommodating a respective guide vane shaft (21, 22), and **in that**, during the restraint, the elastically deformable spring clamping clip, in the area of the two seating regions, produces two opposed forces (F_{B1}, F_{B2}) in the direction of the restrained guide vane shafts.

2. Guide arrangement of a turbomachine, comprising at least one guide vane arranged on a rotatably mounted guide vane shaft (21, 22), **characterized in that** the guide vane shaft (21, 22) is restrained against a housing part by means of a spring clamping clip (1), the spring clamping clip (1) having a shaft seating region for accommodating the guide vane shaft (21, 22) and a housing seating region for accommodating the housing part, and **in that**, during the restraint, the elastically deformable spring clamping clip, in the area of the two seating regions, produces two opposed forces in the direction of the restrained guide vane shaft on the one hand and in the direction of the housing part on the other hand.

3. Guide arrangement according to either of Claims 1 and 2, **characterized in that** the seating regions (11, 12) are designed to be curved in opposite directions.

4. Guide arrangement according to one of Claims 1 to 3, **characterized in that** the spring clamping clip (1) and/or the guide vane shaft (21, 22) are/is provided with an anti-wear coating, and/or **in that** an anti-wear coating is arranged between spring clamping clip (1) and guide vane shaft (21, 22).

5. Guide arrangement according to Claim 4, **characterized in that** the seating regions are coated with an anti-wear coating.

6. Exhaust turbocharger, **characterized by** a guide arrangement according to one of Claims 1 to 5.

## Revendications

1. Dispositif de guidage d'une turbomachine, comprenant plusieurs aubes directrices disposées sur des arbres d'aubes directrices (21, 22) montés à rotation, **caractérisé en ce que** deux arbres d'aubes directrices (21, 22) sont à chaque fois serrés au moyen d'un étrier de serrage à ressort (1), l'étrier de serrage à ressort (1) présentant à chaque fois une région de support d'arbre (11, 12) pour recevoir à chaque fois un arbre d'aube directrice (21, 22), et **en ce que** lors du serrage, l'étrier de serrage à ressort déformé élastiquement provoque dans la région des deux régions de support deux forces de sens opposés (F_{B1}, F_{B2}) dans la direction des arbres d'aubes directrices serrés.

2. Dispositif de guidage d'une turbomachine, comprenant au moins une aube directrice disposée sur un arbre d'aube directrice (21, 22) monté à rotation, **caractérisé en ce que** l'arbre d'aube directrice (21, 22) est serré contre une partie de boîtier au moyen d'un étrier de serrage à ressort (1), l'étrier de serrage à ressort (1) présentant une région de support d'arbre pour recevoir l'arbre d'aube directrice (21, 22), ainsi qu'une région de support de boîtier pour recevoir la partie de boîtier, et **en ce que** lors du serrage, l'étrier de serrage à ressort déformé élastiquement provoque dans la région des deux régions de support deux forces de sens opposés dans la direction de l'arbre d'aube directrice serré d'une part et dans la direction de la partie de boîtier d'autre part.

3. Dispositif de guidage selon la revendication 1 ou 2, **caractérisé en ce que** les régions de support (11, 12) sont réalisées avec des courbures opposées.

4. Dispositif de guidage selon l'une quelconque des revendications 1 à 3, **caractérisé en ce que** l'étrier de serrage à ressort (1) et/ou l'arbre d'aube directrice (21, 22) sont revêtus d'une couche de protection anti-usure et/ou **en ce qu'**une couche de protection anti-usure est disposée entre l'étrier de serrage à ressort (1) et l'arbre d'aube directrice (21, 22).

5. Dispositif de guidage selon la revendication 4, **caractérisé en ce que** les régions de support sont revêtues d'une couche de protection anti-usure.

6. Turbosoufflante à gaz d'échappement **caractérisée par** un dispositif de guidage selon l'une quelconque des revendications 1 à 5.
